# EUROPEAN PATENT SPECIFICATION

(11) **EP 0 512 612 B1**
(45) Date of publication and mention of the grant of the patent: **04.02.1998**
(21) Application number: 92201185.3
(22) Date of filing: 29.04.1992
(51) Int. Cl.: B65D 65/40, A61J 1/05, B01L 3/08

(54) **A container and related sample collection tube**
Container und zugehöriger Probensammelbehälter
Conteneur avec un collecteur d'échantillon

(30) Priority: 03.05.1991 US 695200
(43) Date of publication of application: 11.11.1992
(73) Proprietor: Becton, Dickinson and Company, Franklin Lakes, New Jersey 07417-1880 (US)
(72) Inventor: Grippi, Nicholas A., Ramsey, NJ 07446 (US); Swaim, David, Leonia, NJ 07605 (US)
(74) Representative: von Kreisler, Alek, Dipl.-Chem.

(56) References cited:
- EP-A- 0 149 321
- EP-A- 0 300 221
- US-A- 4 082 854
- US-A- 4 284 671
- US-A- 4 601 926
- US-A- 4 835 214

## Description

### BACKGROUND OF THE INVENTION

### 1. Field of the invention

This invention relates to a sample container assembly comprising a barrier label for providing an effective barrier against gas and water vapor permeability of the container and for extending shelf-life of the container, especially of a plastic container.

### 2. Description of Related Art

Containers, whether rigid, semi-rigid, flexible, lidded or collapsible, or a combination of these, serve not merely to contain the material being handled, but to prevent ingress of undesirable substances from the environment. Oxygen from the atmosphere has long been regarded as one of the most reactive substances to the materials of which containers are made from.

Containers made exclusively of glass or metal have good barrier properties both to egress of all substances from the container and to ingress of all substances from the environment. In most instances, gas permeation through a container made from glass or metal is negligible.

Containers made of polymers in whole or in part generally do not have the superior shelf life or permeability barrier properties that containers made of glass or metal do. These deficiencies have restricted the use of polymers in containers, despite the great advantages of polymers. These advantages include mechanical, thermal and optical properties and the adaptability of fabrication techniques for polymers. A further advantage of containers made from polymers is that they are generally light weight, less breakable and inexpensive to manufacture. Injection molding and extrusion, both possible methods for making articles from plastic, are inexpensive. With injection molding, large cavitation and decreased production times can increase production volume. Additionally, the injection molding process is not labor intensive and can be easily automated.

In the field of packaging materials, new polymers have been developed and used in recent years. In particular, polyethylene terephthalate (PET) has been used in the fabrication of bottles. Bottles manufactured with PET exhibit excellent mechanical properties. Such bottles are used in the packaging of pressurized liquids, such as carbonated beverages. However, such bottles are deficient when used for storing and transporting oxygen sensitive liquids. It has been found that containers made with PET are not sufficiently gas impervious and therefore do not maintain a desirable long shelf-life. See, for example, U.S. Patent No. 3,733,309.

It is also known in the art that polymers such as PET can be laminated to an olefin/vinyl alcohol copolymer (EVOH) to improve the gas barrier permeable properties of the polymer. Blends of PET and EVOH have been found to be useful in making containers having improved barriers to gas permeability. See, for example, U.S. Patent Nos. 3,595,740.

Other patents of interest in the field of barrier properties are U.S. Patent Nos. 4,261,473; 4,284,671, 3,585,177 and Japanese Patent Publication No. 2-167141.

Most polymer materials such as PET, must be processed at relatively high temperatures, such as 290°C or greater. Below such high temperatures PET does not have sufficiently low viscosity to be used successfully in processes for production of containers. Such processes include extrusion, injection molding of preforms and blow-molding processes.

Another polymer material, polyethylene naphthalate (PEN) has been found to be useful for producing monolayer biaxially oriented containers having good barrier properties. PEN polymers have a higher melting point and higher glass transition temperatures than PET polymers. PEN polymers are also useful in a variety of packaging applications. For example, PEN polymers are readily extruded into films or melt blown into containers which have good clarity and excellent barrier properties with regard to oxygen and carbon dioxide.

Numerous attempts have been made to produce a polymer blend useful in commercial applications such as found in U.S. Patent No. 4,835,214 to shepherd, et. al. which discloses blends of PEN with EVOH to form a physical barrier and provide improved resistance to oxygen permeability. A blend of PEN and EVOH provides a tortuous path that the gas permeate molecules such as oxygen must travel through. However, the tortuous path does not completely stop the travel of gas permeate molecules. Such physical barrier polymers often show reduced performance at high temperatures or humidity and require relatively complex multilayer processing technology.

U.S. Patent No. 4,261,473 to Yamada, et. al. also discloses blends of EVOH with a number of polyesters and nylons so as to produce containers with improved physical barrier properties as compared to unblended polymers.

With the increased emphasis on the use of plastic medical products, a special need exists for an improved plastic medical product that will have an effective barrier to gas permeability. Permeating gas molecules would be prevented substantially from completing their travel path and therefore the shelf-life of the medical product would be substantially extended.

Such medical products that would derive a great benefit from an improved arrangement that forms an effective barrier to gas permeability include, but are not limited to, collection tubes and particularly those used for blood collection such as evacuated tubes.

As will be understood by practitioners-in-the-arts evacuated tubes are used in great numbers for taking blood samples, with the tubes containing reagents for reacting with the blood samples for diagnostic and routine testing. The tubes may also be non-evacuated tubes for taking samples for one reason or another. While non-evacuated tubes are utilized in great numbers, it is preferred to use evacuated tubes for many specific applications. Such applications include but are not limited to maintaining a seal of the tube prior to use and for facilitating the entry of the sample into the evacuated tube for subsequent testing of the sample.

Blood collection tubes require certain performance standards to be acceptable for use in medical applications. Such performance standards include the ability to maintain greater than 90% original draw volume, to be radiation sterilizable and to be noninterfering in tests and analysis. Liquid additive tubes require the same performance standards and additionally the ability to maintain 90% of their solution contents.

One of the most critical performance standards of the blood collection tube is the draw volume retention. Draw volume retention depends on the existence of a certain vacuum, or reduced pressure, inside the tube. The draw volume changes in direct proportion to the change in vacuum (reduced pressure). Therefore, draw volume retention is dependent on good vacuum retention.

For example, it is important to maintain the vacuum over a period of time in order to provide appropriate storage life for evacuated tubes prior to their being used. That is, it is important for the vacuum level to be maintained for a period of time prior to the time when a technician or a nurse uses the tube for collecting a blood sample.

Radiation sterilizable means that after the tube is exposed to certain levels of radiation in the sterilization process, there is substantially no change in optical or mechanical or functional properties in the tube.

Noninterference in performance of a tube's specifications means that the materials of the tube, such as glass or plastic materials do not interfere with testing and analysis that is typically performed on blood in the tube. Such tests include but are not limited to hematology, blood chemistry, blood, typing, toxicology analysis, therapeutic drug monitoring and other clinical tests involving body fluids.

Typically, evacuated blood collection tubes have paper or foil labels applied over the outer surface. However, paper labels do not provide effective barrier properties and foil such as metallic foil, is not transparent.

A wide variety of adhesive labels are commercially available. Most of these are general purpose labels, having an adhesive layer on one side and having their front surfaces adapted for written or typed identifications.

U.S. Patent No. 4,884,827 to Kelley discloses a plastic adhesive label with opaque end portions and a transparent middle portion for viewing the contents of a collection tube. Suitable plastics disclosed are poly(vinylchloride), polyethylene, polypropylene, and polyester such as mylar. Suitable adhesives disclosed are those known in the art as permanent pressure-sensitive adhesives which are compatible with most plastics. However, the plastic label of '827 does not provide barrier protection against gas and water and does not provide a complete translucent finish.

U.S. Patent No. 4,284,671 to Cancio et al., discloses polymer blends of a polyester and polyvinyl alcohol or their copolymers as barrier packaging compositions. In particular, '671 discloses the coextrusion of three layers comprising a polyolefin outer layer, a middle layer containing a blend of polyester and polyvinyl alcohol or ethylene/vinyl alcohol copolymer, and a second external layer of polyolefin. However, '671 does not teach or suggest a barrier label with a translucent finish for use on a blood collection tube.

Despite the variety of known labels, there are apparently no labels specifically intended for barrier use or for identifying sample tubes while simultaneously not obscuring the contents of such sample tubes from view.

Therefore, it is desirable to be able to provide a plastic evacuated blood collection tube with a barrier label which can be attached conveniently and securely to a blood collection tube while not observing its contents that would be able to meet certain performance standards and be effective and usable in medical applications.

### SUMMARY OF THE INVENTION

The present invention is a sample container assembly comprising:
a) a plastic container having an open end, a closed end, an inner surface and an outer surface; and
b) a barrier label comprising a front surface and a rear outer surface of said container and extends over a major portion of said outer surface of said container, which barrier label comprises
   a first layer selected from polyamide, polyolefin and polyester;
   a second layer selected from ethylene/vinyl alcohol copolymer, polyvinylidene dichloride and polyacrylo nitrile; and
   a third layer selected from polyamide, polyolefin and polyester.

That is, a barrier label is secured over the previously formed plastic container. Such a barrier label improves container barrier properties and extends the shelf-life of containers, especially plastic evacuated blood collection devices.

The barrier label is placed around the container and then adhered to the container by methods such as an adhesive layer, heating the barrier label and container to a temperature sufficient to cause the barrier label to heat-shrink onto the container or by expanding the container into the barrier label by blow molding.

It will be understood that it makes no difference whether the container is evacuated or not evacuated in accordance with this invention. The presence of the barrier label secured to the outer surface of the container has the effect of maintaining the general integrity of the container holding a sample so that it may be properly disposed of without any contamination to the user. In addition, the barrier label makes the container stronger overall because of the cushioning characteristics of the barrier label.

Preferably, the barrier label is transparent, translucent or colorless and may or may not have a printed pattern thereon.

The barrier label desirably comprises a first layer of biaxial stretched or biaxial oriented polypropylene and a second layer of ethylene/vinyl alcohol copolymer (EVOH).

The barrier label preferably comprises a first layer of biaxial stretched or biaxial oriented polypropylene, a second layer of EVOH, a third layer of biaxial stretched polypropylene and a fourth layer of an adhesive. Most preferably the barrier label comprises a first layer of polychlorotrifluoroethylene (PCTFE) and a second layer of EVOH.

The barrier label is formed around the container wherein the label may have overlapping portions which may be secured. They may be secured by methods such as heat-seal, ultra-sonic seal, high-frequency seal, adhesive or solvent.

It may be appropriate to apply a heat-activated or pressure sensitive adhesive to the inner surface of the barrier label. The adhesive may be printed or applied to the inner surface of the barrier label. A heat-activated adhesive may be applied when the barrier label is heated for application onto the container, in this way the adhesive becomes activated and helps adhere the barrier label to the container being wrapped. Any conventional heat activated or pressure sensitive adhesive may be used for application onto the container and preferably does not interfer with transparency of the barrier label.

A unique feature of the invention is that a container with the barrier label has improved barrier properties as compared to a container with a paper label. Barrier properties include the reduction of permeating gas molecules and water vapor into and out of the container.

Printing may be placed on the barrier label material which is to be wrapped around the container of interest. For example, a product identification, bar code, brand name, company logo, lot number, expiration date and other data and information may all be included on the label surface. Moreover, a matte finish or a corona discharged surface may be developed on the outer surface of the barrier label so as to make the surface appropriate for writing additional information on the label. Furthermore, another pressure sensitive adhesive label may be placed over the outer surface of the barrier label so as to accommodate various hospital over-labels, for example.

With the foregoing and additional features in view, this invention will now be described in more detail, and other benefits and advantages thereof will be apparent from the following description and the accompanying drawings.

### DESCRIPTION OF THE DRAWINGS

As purely illustrative of an arrangement of a composite container with a barrier label, one may note the attached drawings in which several embodiments of such a composite container are shown utilizing the barrier label feature of the invention.

FIG. 1 is a perspective view of a typical blood collection tube with a stopper.

FIG. 2 is a longitudinal sectional view of the tube of FIG. 1 taken along line 2-2 thereof without the stopper.

FIG. 3 is a longitudinal sectional view of a tube-shaped container without a stopper similar to the tube of FIG. 1 with the barrier label thereover it, and illustrating one form of the invention.

FIG. 4 is a longitudinal sectional view of a tube-shaped container without a stopper similar to the tube of FIG. 1 with a barrier label thereover illustrating an additional embodiment of the invention.

FIG. 5 is a longitudinal sectional view of a tube-shaped container with a stopper similar to the tube of FIG. 1 with a barrier label thereover.

FIG. 6 is a longitudinal sectional view of a further embodiment of the invention illustrating a barrier label and tube structure with the stopper in place similar to the tube of FIG. 1 and with the barrier label encompassing both the tube container and the stopper therefor.

FIG. 7 is a perspective view of a two layer barrier label.

### DETAILED DESCRIPTION

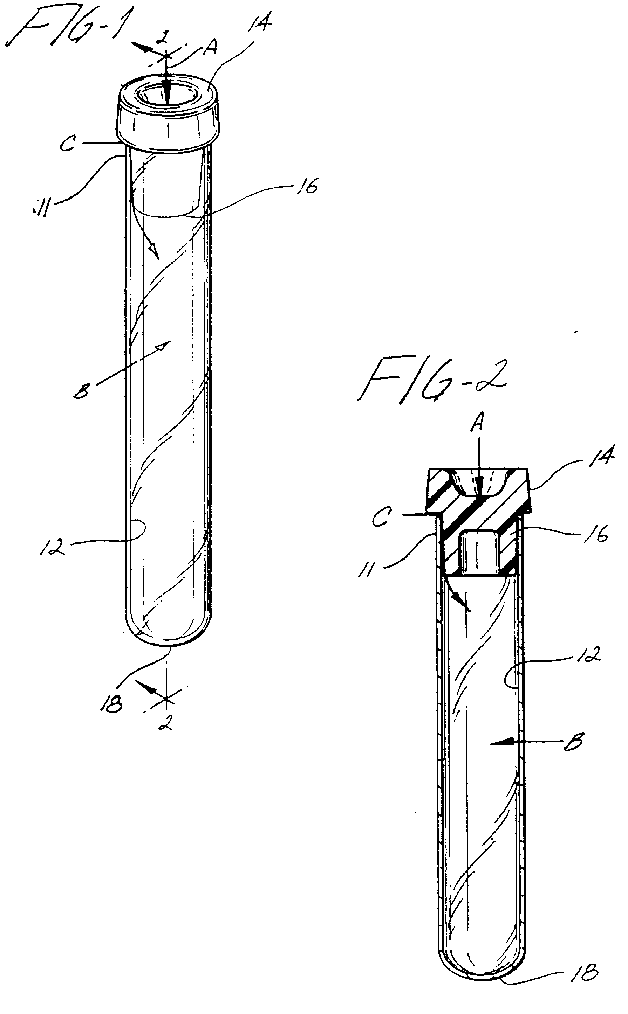

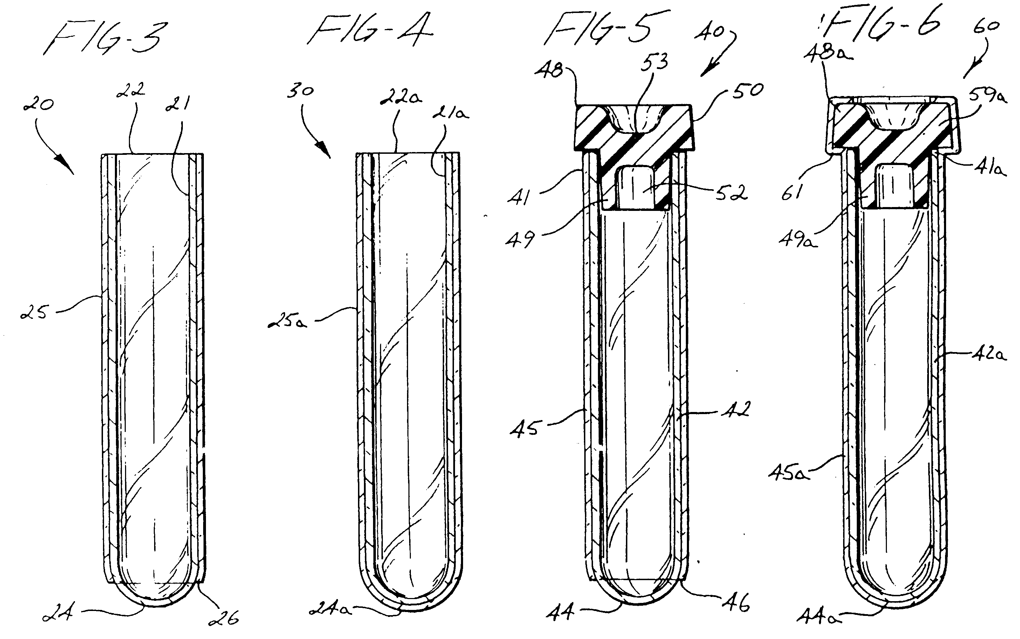

Referring to the drawings in which like reference characters refer to like parts throughout the several views thereof, FIGS. 1 and 2 show a typical blood collection tube **10**, having an open end **16**, a closed end **18** and stopper **34** which includes a lower annular portion or skirt **38** which extends into and presses against the inside walls **12** of the tube for maintaining stopper **34** in place. FIG. 2 schematically illustrates that there are three mechanisms for a change in vacuum in a blood collection tube; (A) gas permeation through the stopper material; (B) gas permeation through the tube material and (C) leak at the closure-tube interface. Therefore, when there is substantially no gas permeation and no leak, there is good vacuum retention and good draw volume retention.

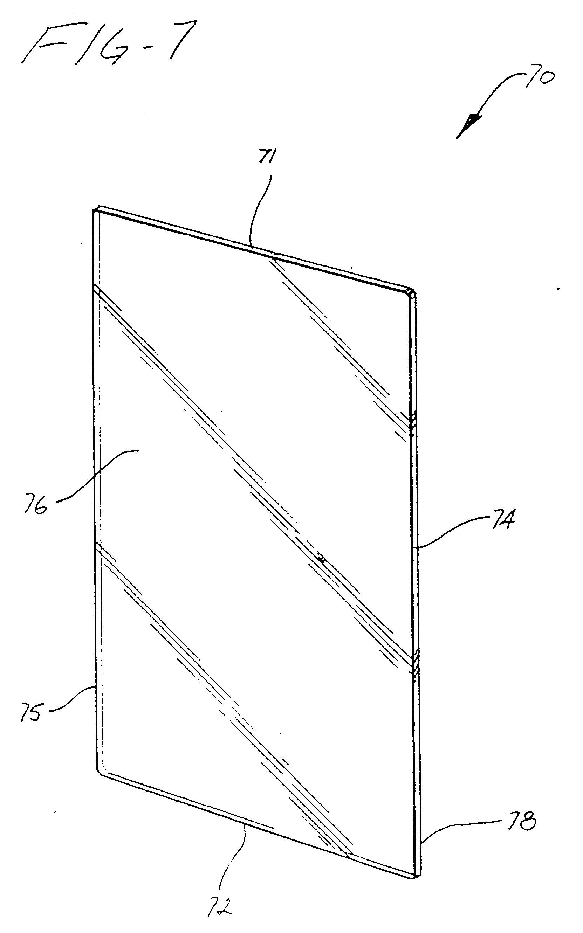

FIG. 3 shows a preferred embodiment of the invention **20** comprising a tube **21**, which may be plastic or glass, having an open end **22** and a closed end **24**. This embodiment shows a barrier label **25** extending over a substantial portion of the length of the tube. As shown in FIG. 3, barrier label **25** covers all of the tube with the exception of closed end **24** thereof. That is, barrier label **25** ends at edge **26** thereof.

FIG. 4 shows an additional embodiment and configuration of the barrier label with a glass or plastic tube. The alternate embodiment functions in a similar manner to the preferred embodiment illustrated in FIG. 3 and includes many components which are substantially identical to the components of the embodiment of FIG. 3. Accordingly, similar components performing similar functions will be numbered identically to those components in the embodiment of FIG. 3, except that a suffix "a" will be used to identify those components in FIG. 4.

Referring now to FIG. 4, a further embodiment **30** of the invention is shown having a glass or plastic tube **21a** with an open end **22a** and a closed end **24a**. Covering the entire tube is barrier label **25a** which, in this embodiment is upon the entire outer surface of tube. It will be understood by practitioners-in-the-art that the container integrity is substantially increased by this barrier label configuration so as to simultaneously provide improved gas and water barrier properties.

The barrier label may be applied to an evacuated container, for example, once the stopper therefor has been put into place and the vacuum applied, holding the stopper in a sealing position. Subsequent application of the barrier label, which is to be applied may be over both the container itself and it may extend up and over the stopper. By doing so, a further sealing of the stopper/tube interface takes place and a registered serration may be incorporated into the barrier label at the stopper/tube interface in order to develop a tamper-proof closure. Such an arrangement may be appropriate, for example, in drug abuse testing, specimen identification and quality control.

FIG. 5 illustrates embodiment **40** of the invention comprising stopper **48** therefor in place for closing open end **41** of tube **42**. As can be seen, stopper **48** includes an annular upper portion **50** which extends over the top edge of tube **42** as well as the top edge of barrier label **45**. Stopper **48** includes a lower annular portion or skirt **49** which extends into and presses against the inside walls of tube **42** for maintaining stopper **48** in place. Also, the annular lower skirt **49** of stopper **48** defines a well **52** which, in turn, defines a septum portion **53** of stopper **48** for receiving a cannula therethrough. Thus, the user, once receiving a container such as that shown in FIG. 5 with a sample contained therein, may insert a cannula through septum **53** for receiving part or all of the contents in tube **42** to perform various tests on a sample. Covering a substantial portion of the length of the tube is barrier label **45**. Barrier label **45** covers substantially most of the tube with the exception of closed end **44** thereof. The barrier label ends at edge **46** thereof.

In this connection, and as will be understood by practitioners-in-the-arts such tubes may contain reagents in the form of additives or coatings on the inner wall of the tube. For example, components for reacting with samples prior to their being tested to help to preserve and stabilize a sample during transport or storage or to determine the presence or absence of infectious agents or other substances in a sample.

FIG. 6, shows an additional embodiment and configuration of the barrier label with a glass or plastic tube. The alternate embodiment functions in a similar manner to the embodiment illustrated in FIG. 5. Accordingly, similar components performing similar functions will be numbered identically to those components in the embodiment of FIG. 5, except that a suffix "a" will be used to identify those components in FIG. 6.

Referring now to FIG. 6, a further embodiment **60** of the invention comprising a glass or plastic tube, **42a**, having an open end **41a** and a closed end **44a**. Disposed in the tube is stopper **48a** having on annular upper flange **50a** which extends over the top surface of the wall of the tube at open end **41a** thereof. Stopper **48a** further includes a lower annular skirt **49a** which is pressed against the inner surface of the tube wall, as discussed above. This embodiment differs from the previous embodiment in that the tube is first evacuated with the simultaneous placement of stopper **48a** therein followed by the application of barrier label **45a** thereover. Barrier label **45a** incorporates both upper portion **50a** of stopper **48a**, as well as the entire container tube. Barrier label **45a** includes serrations **61** at the tube, stopper interface. The serrations are registered so that it can be determined if the sealed container has been tampered with. Such an embodiment may be utilized, for example, for sealing the container with the stopper in place. Once a sample has been placed in tube **42a**, the sample cannot be tampered with by removal of stopper **48a** because serrations **61** would determine that the sample had been tampered with. An embodiment such as that shown and described in FIG. 6, may be modified so that the label encompasses the stopper as shown in FIG. 6, and only a portion of the tube as shown in FIG. 5.

FIG. 7 shows a barrier label **70** having a first end edge portion **71** substantially parallel to a second end edge portion **72**, a third end edge portion **74** substantially parallel to a fourth end edge portion **75**, a front surface **76** and a rear surface **78**. The front surface is capable of receiving markings from a writing instrument and the rear surface may have an adhesive material on at least one of said end portions or over the entire rear surface.

The barrier label is desirably a laminate comprising a layer or layers of high barrier performance material including polyamide, polyolefin and polyester. Polyamide includes biaxial oriented nylon, aromatic amorphous polyamide, polyvinyl chloride and mixtures thereof. Polyolefin includes biaxial oriented polypropylene, low density polyethylene, polychlorotrifluoroehtylene and mixtures thereof. Polyester includes polyethylene terephthalate, polyethylene naphthalate, polyethylene isophthalate and mixtures thereof. The properties of applicable barrier label materials are shown in Table I.

**TABLE I**

| **GAS TRANSMISSION RATE OF POLYMER FILMS** | | | |
|---|---|---|---|
| POLYMER | OXYGEN* | | WATER VAPOR** |
| | DRY | WET (90% R.H.) | |
| Ethylene/Vinyl Alcohol Copolymer*** | | | |
| 27 Mole % Ethylene | 0.0006 | 0.20 | 8.0 |
| 32 Mole % Ethylene | 0.013 | 0.22 | 3.8 |
| 44 Mole % Ethylene | 0.060 | 0.22 | 1.4 |
| Polyvinylidene Dichloride (PVdC) | 0.03-0.50 | 0.15-0.65 | 0.2-0.5 |
| Polyacrylo nitrile (PAN) | 0.40 | 0.45 | 0.60 |
| Biaxial Oriented Nylon | 1.78 | 1.43 | 1.3 |
| Polyvinyl Chloride (PVC) | 14-18 | 14-18 | 2.4 |
| Biaxial Oriented Polypropylene (BOPP) | 150-180 | 150-180 | 0.36 |
| Low Density Polyethylene (LDPE) | 500-600 | 500-600 | 0.60 |
| Polychlorotrifluoroethylene (PCTFE) | 7.0 | 7.0 | 0.03 |
| Polyethylene Terephthalate (PET) | 2-10 | 3-9 | 1.0 |
| Polyethylene Naphthalate (PEN) | 0.5-3 | 0.7-3 | 0.4 |
| Polyethylene Isophthalate (PEI) | 0.7-4 | 0.9-3 | 0.6 |

| | | | |
|---|---|---|---|
| * Units in 3.98·10⁻⁶·cm²/d·bar (cm³-mil/100 in² - day - atm) at 20 °C. | | | |
| ** Units in 3.94·10⁻⁶·g/cm·d (g-mil/100 in² - day) at 90 % R.H. at 37.8 °C (100 °F). | | | |
| *** EVAL®-L, EVAL®-F, and EVAL®-H (trademark of EVAL Company of America, Lisle, Illinois). | | | |
| **** Aromatic amorphous polyamide. | | | |

The barrier label may be a clear or translucent laminate material so that when applied to a container, a clear or translucent finish is achieved. The barrier label is preferably translucent so that the contents of the article are always visable to the observer at the same time identifying information may be displayed on the barrier label.

Desirably, the barrier label comprises a first layer of polyamide, polyolefin or polyester, a second layer of an ethylene/vinyl alcohol copolymer (EVOH), polyvinylidene dichloride or polyacrylo nitrile and a third layer of a polyamide, polyolefin or polyester. The barrier label may comprise a fourth layer of an adhesive.

A desirable barrier label comprises a first layer of a biaxial streched or biaxial oriented polypropylene and a second layer of EVOH.

A preferred laminate barrier label comprises a first layer of a biaxial stretched or biaxial oriented polypropylene, a second layer of EVOH, a third layer of a biaxial stretched polypropylene and a fourth layer of an adhesive. Most preferably the barrier label comprises a first layer of polychlorotrifluoroethylene (PCTFE) and a second layer of EVOH.

EVOH provides an effective barrier against permeating gas molecules such as oxygen or nitrogen whereas polypropylene and PCTFE are effective barriers against permeating water molecules. It is also believed that the thickness of the EVOH layer is critical to impart high barrier properties to the barrier label.

As shown in Table I, EVOH is a good oxygen barrier film. In particular, EVOH EVAL®-L (trademark of EVAL Company of America, Lisle, Illinois) comprises 32 mole % ethylene which provides good mechanical properties to the film. Preferably, the amount of ethylene in EVOH ranges from 25% to 50% with the balance comprising vinyl alcohol.

An effective substitute for EVOH in the barrier label includes but is not limited to polyvinylidenedichloride (PVdC) and polyacrylo nitrile (PAN).

Suitable adhesives are those known in the trade as permanent pressure-sensitive adhesives and which are also compatible with most plastics. Adhesives meeting these criteria will also bond to other materials such as metal and glass.

An alternate barrier label material is foil. However, foil is relatively heavy, needs to be laminated with polyolefins and is unable to provide a clear or translucent finish to the article.

The barrier label provides an effective barrier against gas and water permeability of articles made of polymer compositions and blends thereof. Such polymer compositions include polymeric substrate resins such as polypropylene, polystyrene, polyester, polyethylene terephthalate (PET), polyethylene naphthalate (PEN) and mixtures thereof. An example of a polymer blend composition includes
a polymeric substrate resin, an oxidizable resin and an oxidation catalyst.

It will be understood that the barrier label of the invention herein may be arranged to conform to any configuration of container and the stopper or cap therefor. Thus, any form of a container wherein plastic is the preferred material may be used. The barrier label is particularly directed to increasing the integrity of a plastic container and for increasing the integrity of other containers made of glass and paper as well.

### EXAMPLE I

### PLASTIC TUBE WITH BARRIER LABEL AS COMPARED TO PLASTIC TUBE WITHOUT BARRIER LABEL

Saturated plastic tubes, 13x75mm, with and without a barrier label were placed in a controlled environment at 40°C and 4.05 bar (4 atm). The 40 °C and 4.05 bar (4 atm) provide conditions for accelerated ambient aging.

A barrier label comprising a first layer of a biaxial oriented polypropylene, a second layer of ethylene/vinyl alcohol copolymer and a third layer of a biaxial oriented polypropylene, was wrapped around tubes in category A. Tubes in category B, the control group, did not have a barrier label.

Each tube was tested for draw volume over different time periods with the following reported results in Table 2:

**TABLE 2**

| | A | B |
|---|---|---|
| Initial Draw (N=20) | 3.848 | 3.9274 |
| Draw at 4 week (N=10) | 3.6227 | 3.3869 |
| Draw at 6 weeks (N=10) | 3.4683 | 3.1549 |
| Draw at 8 weeks (N=10) | 3.3136 | 2.8817 |
| Draw at 12 weeks (N=10) | 3.1540 | 2.4758 |
| Four week (%) loss | 1.09 | 7.79 |
| Six weeks (%) loss | 5.87 | 13.76 |
| Eight weeks (%) loss | 9.89 | 19.67 |
| Twelve weeks (%) loss | 13.91 | 26.63 |
| N = sample size measured. | | |

The results show that an improved draw volume was achieved with a barrier label and a plastic container as compared to a plastic container with no barrier label.

## Claims

1. A sample container assembly comprising:
a) a plastic container having an open end, a closed end, an inner surface and an outer surface; and
b) a barrier label comprising a front surface and a rear outer surface of said container and extends over a major portion of said outer surface of said container, which barrier label comprises
a first layer selected from polyamide, polyolefin and polyester;
a second layer selected from ethylene/vinyl alcohol copolymer, polyvinylidene dichloride and polyacrylonitrile; and
a third layer selected from polyamide, polyolefin and polyester.

2. The assembly of claim 1 further comprising:
a closure in said open end of said container whereby a container and closure interface is formed.

3. The assembly of claim 2 wherein said plastic container is a tube and said closure is an elastomeric stopper.

4. The assembly of claim 3 wherein said first layer consists of polychlorotrifluoroethylene and said second layer consists of an ethylene/vinyl alcohol copolymer.

## Patentansprüche

1. Probenbehälteranordnung, umfassend:
a) einen Kunststoffbehälter mit einem offenen Ende, einem geschlossenen Ende, einer inneren Oberfläche und einer äußeren Oberfläche; sowie
b) ein Sperretikett, das eine vordere Oberfläche und eine hintere äußere Oberfläche des Behälters umfaßt und sich über den größten Teil der äußeren Oberfläche des Behälters erstreckt, wobei das Sperretikett
eine erste Schicht, die aus Polyamid, Polyolefin und Polyester ausgewählt ist,
eine zweite Schicht, die aus Ethylen/Vinylalkohol-Copolymer, Polyvinylidendichlorid und Polyacrylnitril ausgewählt ist, und
eine dritte Schicht, die aus Polyamid, Polyolefin und Polyester ausgewählt ist,
umfaßt.

2. Anordnung gemäß Anspruch 1, die weiterhin einen Verschluß in dem offenen Ende des Behälters umfaßt, wodurch eine Grenzfläche zwischen Behälter und Verschluß gebildet wird.

3. Anordnung gemäß Anspruch 2, wobei der Kunststoffbehälter ein Röhrchen ist und der Verschluß ein elastomerer Stopfen ist.

4. Anordnung gemäß Anspruch 3, wobei die erste Schicht aus Polychlortrifluorethylen besteht und die zweite Schicht aus einem Ethylen/Vinylalkohol-Copolymer besteht.

## Revendications

1. Ensemble de conteneur d'échantillon comprenant :
a) un conteneur en matière plastique comportant une extrémité ouverte, une extrémité fermée, une surface intérieure et une surface extérieure ; et
b) une étiquette barrière comprenant une surface avant et une surface extérieure arrière dudit conteneur et qui s'étend sur une majeure partie de ladite surface extérieure dudit conteneur, laquelle étiquette barrière comprend :
une première couche choisie parmi le polyamide, une polyoléfine et le polyester;
une deuxième couche choisie parmi un copolymère d'éthylène/alcool vinylique, le dichlorure de polyvinylidène et le polyacrylonitrile ; et
une troisième couche choisie parmi le polyamide, une polyoléfine et le polyester.

2. Ensemble selon la revendication 1, comprenant en outre :
une fermeture dans ladite extrémité ouverte dudit conteneur au moyen de laquelle est formée une interface conteneur/fermeture.

3. Ensemble selon la revendication 2, dans lequel ledit conteneur en matière plastique est un tube et ladite fermeture est un couvercle élastomère.

4. Ensemble selon la revendication 3, dans lequel ladite première couche se compose de polychlorotrifluoroéthylène et ladite deuxième couche se compose d'un copolymère d'éthylène/alcool vinylique.
